# EUROPEAN PATENT APPLICATION

(11) **EP 3 702 256 A1**
(43) Date of publication of application: **02.09.2020**
(21) Application number: 20159102.1
(22) Date of filing: 24.02.2020
(51) Int. Cl.: B62H 3/10, B62H 5/00

(54) **DEVICE FOR RETAINING A BICYCLE IN UPRIGHT POSITION ON A BASE, COMPRISING A SUPPORT BODY WITH AN INSERTION SLOT**

(30) Priority: 28.02.2019 NL 2022653
(71) Applicant: Van De Vecht, Cornelis Hendrikus Johannes, 3991 MR Houten (NL)
(72) Inventor: Van De Vecht, Cornelis Hendrikus Johannes, 3991 MR Houten (NL)
(74) Representative: van Dokkum, Willem Gerard Theodoor

(57) **Abstract**

Device (1) for retaining a bicycle (2) in upright position on a base (3), comprising a support body (4) provided with an insertion slot (5), arranged for receiving a connection part (6), that is provided between the bicycle crank (7) and the foot pedal (8). The support body comprises an insertion opening (9), which is arranged for inserting the connection part of one of the foot pedals (8) of the bicycle to be retained, wherein the insertion opening is connected to the insertion slot (5). The base can be formed by a fixed base (3) or a mobile base, for example a transport frame (10) for moving bicycles.

## Description

The invention relates to a device, intended and arranged for retaining a bicycle essentially in upright position on a base.

Such a device is generally known and is commonly referred to as a bicycle clamp. Object of the present invention is to provide such a type-related device, but with better characteristics.

According to the invention, a device is provided, intended and arranged for retaining a bicycle essentially in upright position on a base,
comprising an essentially vertically upwardly extending support body, provided with an insertion slot, wherein the support body and the insertion slot are arranged for receiving in the insertion slot of a connection part, that is provided between one of the cranks and the foot pedal connected to that crank of the bicycle to be retained or a similar bicycle.

In a preferred embodiment of the invention, the support body comprises a support plate having a thickness which, at least in an edge region of the insertion slot, is smaller than the free distance between the outside of a crank and the inside of the food pedal connected thereto of the bicycle to be retained or a similar bicycle, which support plate is provided with an insertion slot having a width that is larger than the diameter of the connection part, that is provided between the crank and the foot pedal of the bicycle to be retained or a similar bicycle, and that is smaller than the thickness and/or width of the foot pedal.

In the device proposed by the invention, for the purpose of retaining a bicycle, the bicycle is manipulated such, that the connection part between the crank and the foot pedal is positioned in the insertion slot in the support plate. Because the insertion slot has a width, that is essentially smaller than the thickness and/or width of the foot pedal, it is prevented that the bicycle can fall over after that connection part (normally an inconspicuous part of the foot pedal shaft) between the crank and the foot pedal is placed into the insertion slot within the support plate. The support plate with insertion slot forms a sort of fork, as it were, in which the (relatively slim) connection part provided between the crank and the foot pedal is received. The stability of the device according to the invention is greater than that of bicycle clamps in which the front tire of a bicycle must be clamped, since the (somewhat flexible) front tire essentially forms the connection between the bicycle and the "fixed world". Moreover, the retention point of the bicycle is located at the very front of the bicycle, which has a negative effect on the stability. Furthermore, the front wheel is hingedly connected (after all via the front fork and handlebar) to the majority of the bicycle frame. With the method according to the invention, a better and more stable (transverse) support of the bicycle is obtained.

Preferably, the support plate comprises an insertion opening, which is arranged for retaining a foot pedal of the bicycle to be retained or a similar bicycle, or at least for inserting the connection part, that is provided between the crank and the foot pedal, wherein the opening formed by the insertion opening connects to the opening formed by the insertion slot.

The base can be formed by a fixed base (formed by or consisting of "the fixed world"). However, the base can also be formed by a mobile base, for example a transport frame, which is arranged for moving the bicycle or a similar bicycle.

The invention will now be further discussed with reference to the figure description below.
- Figure 1: shows an example of an embodiment of a device according to the invention;
- Figure 2: shows an alternative embodiment of a device according to the invention;
- Figure 3 and 4: show some more examples of embodiments;
- Figure 5: shows a series of juxtaposed devices according to the invention including bicycles parked therein.

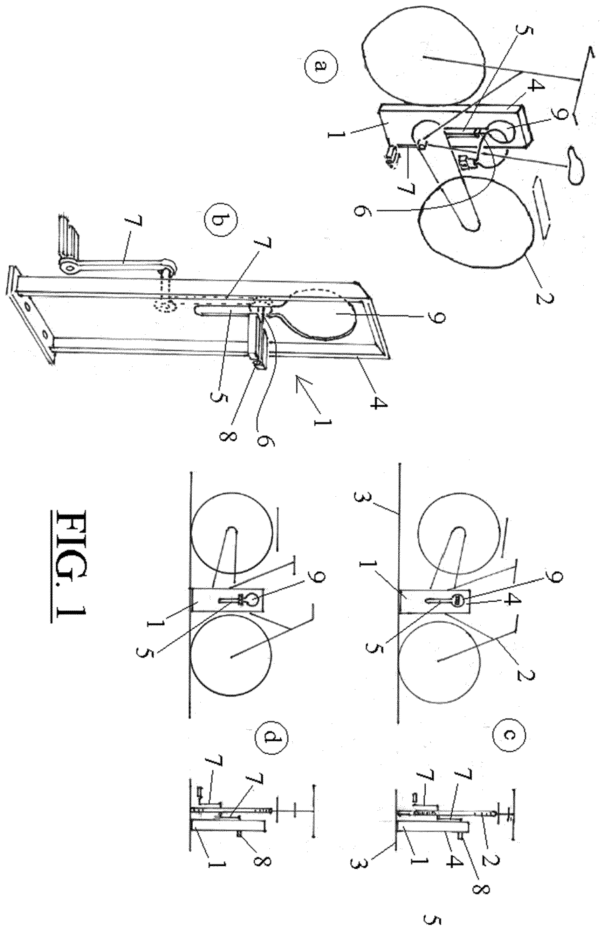

Figure 1 shows an example of an embodiment of a device according to the invention, intended and arranged for retaining a bicycle 2 essentially in upright position on (i.e. with respect to) a base 3.

The device 1 comprises a support body 4, extending essentially vertically upwards, provided with an insertion slot 5. The support body 4 and the insertion slot 5 are arranged for receiving in (or through) the insertion slot 5 of a connection part 6, which is provided between one of the cranks 7 and the foot pedal 8 connected to that crank 7 of the bicycle 2 to be retained or a similar bicycle.

In the preferred embodiment shown in Figure 1, the support body 4 comprises a support plate having a (plate) thickness which, at least in an edge region near (the side of) the insertion slot 5, is smaller than the free distance between the outside of the crank 7 and the inside of the foot pedal 8 connected thereto of the bicycle 2 to be retained, or of a similar bicycle. The support plate 4 is provided with an insertion slot 5 having a width that is larger than the diameter of a connection part 6 between the crank 7 and the foot pedal 8 of the bicycle 2 to be retained or a similar bicycle. As a result, the connection part 6 has sufficient space (width) to be able to move longitudinally through the insertion slot 5, so that connection part is easily introduced into the insertion slot 5 from above. The width of the insertion slot 5 is smaller than the thickness and/or width of the foot pedal 8, as a result of which the foot pedal 8 cannot "escape" via the insertion slot 5, after the connection part 6 has been introduced into the insertion slot 5. As a result, the bicycle 2 remains essentially in upright position, retained (with ample play) by, on the one hand, the (outside of the) crank 7, which abuts against a side of the support plate of the support body 4 and, on the other hand, the foot pedal 8 (connected via the connection part 6), that abuts against the other side of the support plate. Despite the fairly ample play, with which the bicycle 2 is anchored in the insertion slot 5 by means of the connection part, the crank 7 and the foot pedal 8, it is in fact impossible that the bicycle 2 could fall over, due to the central and (mainly) form-fitting anchoring by means of the connection part, the crank 7, the foot pedal 8 and the insertion slot 5. This is contrary to the conventional bicycle clamps using (force-tight) clamping of the front tire.

In the example of the embodiment shown, the insertion slot 5 extends essentially vertically, and the support body 4 and the insertion slot 5 are thereby arranged for receiving (inserting) the connection part 6 essentially from above. In principle however, it is also possible, without major changes, to provide for that the connection part 6 can be inserted from below into the insertion slot 5. In that case, it would not be necessary to lift the bicycle 2 in order to allow the connection part 6 to descend from above into the insertion slot 5.

In the embodiment shown in figure 1, the support body comprises an insertion opening 9, which is arranged for being able to insert (introduce) a foot pedal 8 of the bicycle to be retained or of a similar bicycle, wherein the opening formed by the insertion opening 9 connects with the opening formed by the insertion slot 5. Subsequently, in order to anchor the bicycle 2, one of the foot pedals 8 of the bicycle 2 is inserted through the insertion opening 9 such, that the foot pedal 8 protrudes out of the other side of the support body 4, so that the connection part 6 between the foot pedal 8 and the crank 7 can be inserted into the insertion slot. The access opening of the insertion slot 5 thus connects to the insertion opening 9, which then functions as an access opening. By using such an insertion opening 9, the upper side of the insertion slot 5 is protected to some extent against personal injury as a result of the (slightly sharp) open access of the insertion slot 5. Additionally, to prevent theft of the bicycle 2, the insertion opening 9 can be used for attaching a chain lock, for example.

The insertion opening 9 may extend essentially above the insertion slot 5, as shown in Figure 1, but also, for example, below the insertion slot 5, wherein the connection part 6 then must be introduced from below into the insertion slot 5 (see also hereabove).

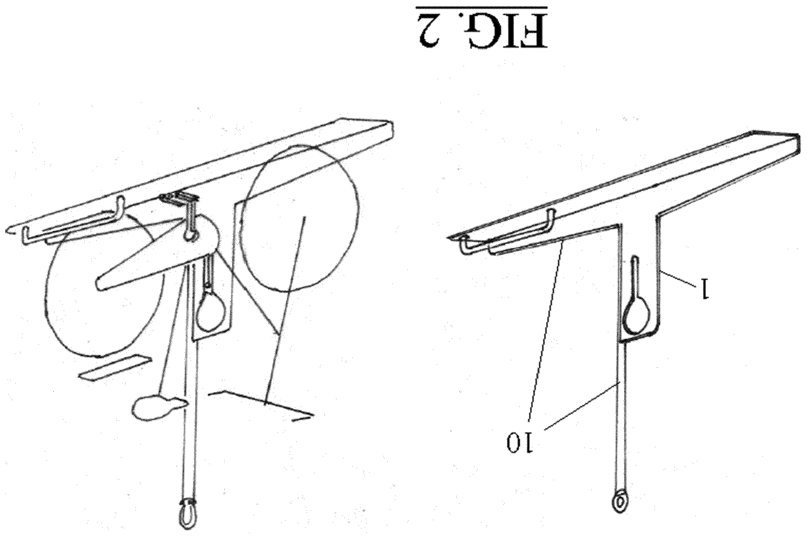

In Figure 1, the base 3 is formed by a fixed base or surface. However, the base can also be formed by a mobile base, as shown in Figure 2. In Figure 2, the mobile base comprises a transport frame 10, which is arranged for moving and/or displacing the bicycle 2 or a similar bicycle, for example as part of a bicycle parking system, as proposed, for example, in the earlier patent application NL2019396, in the name of the applicant.

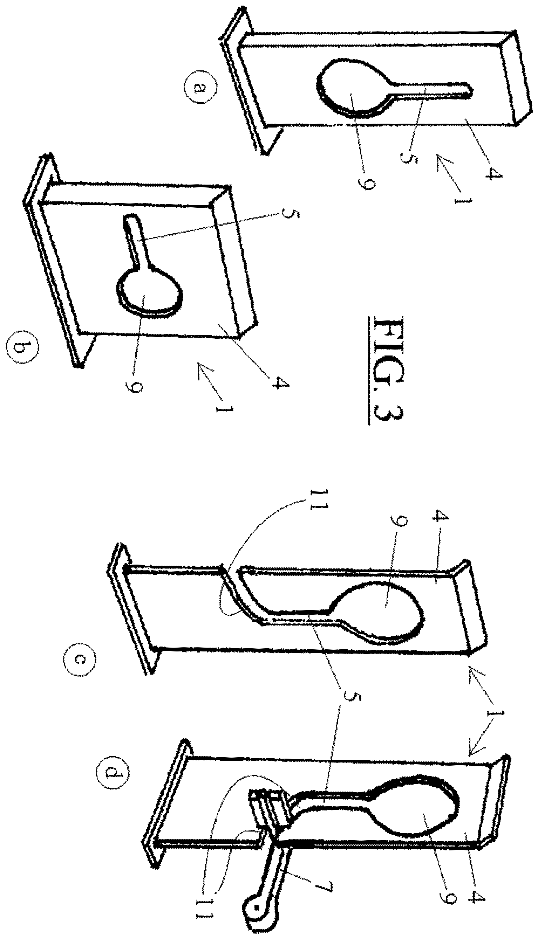

Figure 3 shows a few examples of embodiments of the support body 4.

Figure 3a shows an embodiment, in which the insertion opening 9 extends essentially below the insertion slot 5, therefore the connection part 6 must be introduced into the insertion slot 5 from below.

Figure 3b shows an embodiment, in which the insertion slot 5 extends essentially horizontally, and the insertion opening 9 is located at the end of the insertion slot. Alternatively, the insertion opening 9 may be provided in the central region of the insertion slot 5, for example.

Figure 3c shows an example of an embodiment, in which the insertion slot 5 is provided with and/or connected to one end of a take-out slot 11 which, with its other end (directly, outside the insertion opening 9), leads out of the support body 4. All this is arranged in such a way, that the connection part 6, situated between the relevant crank 7 and the foot pedal 8 connected thereto, can easily and directly be led out of the support body 4 via the take-out slot 11, without using the insertion opening 9 (see Figure 3d). Preferably, said take-out slot 11 comprises a somewhat oblique and/or smooth course, as a result of which the bicycle 2 can be pulled loose easily from the support body 4, because the connection part 6 will be able to follow the course of the take-out slot 11 without experiencing much friction, so that the bicycle 2 can be taken out with ease from the device 1.

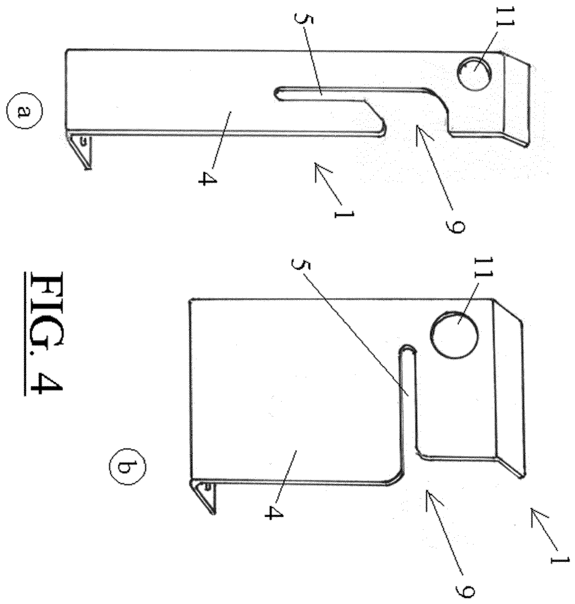

Figures 4a and 4b show two other embodiments of a device 1 according to the invention, intended and arranged for retaining a bicycle essentially in upright position upon a base. The devices each comprise a support body 4 being provided with an insertion slot 5, wherein the support body and the insertion slot are being arranged for receiving into the insertion slot of a connection part, that is provided in the bicycle to be retained between one of the cranks and the foot pedal connected to said crank. In the embodiment of Fig. 4a, the insertion slot extends essentially vertically and the support body and the insertion slot are arranged to receive the connection part, which is positioned between the crank and the foot pedal, essentially from above via a side edge of the support body. In the embodiment of Figure 4b, the insertion slot extends essentially horizontally and the support body and the insertion slot are arranged for receiving, essentially from a side edge, of the connection part positioned between the crank and the foot pedal. In both embodiments of Fig. 4, the support body comprises an insertion opening 9, which is arranged to be able to insert the connection part, that is provided between the crank and the foot pedal, in the direction of the insertion slot 5, wherein the opening formed by the insertion opening 9 on the side of the support body 4 connects to the opening formed by the insertion slot 5. In the embodiments shown in Figure 4, the insertion opening 9 is in open connection with a side edge of the support body 4, which facilitates connecting a bicycle with the support body and subsequent releasing the bicycle therefrom.

Figures 4a and 4b also show an opening 11, which may be provided in the support body 4 for to being able to fit in a cable or chain lock, with which the bicycle can be chained to the support body 4 in the parked state. Such an opening 11 may also be provided in the other embodiments (although not explicitly shown in the other figures).

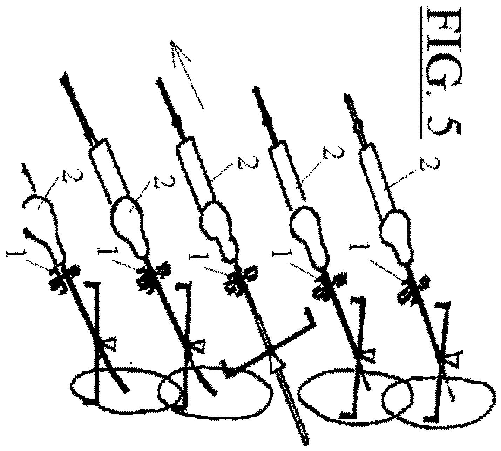

Figure 5 shows a series of devices 1 according to the invention placed next to each other, including the bicycles parked therein. This figure clearly shows, that when use is being made of the devices 1 for the upright retention of the bicycles 2 on a (fixed or mobile) base, advantageously by using the devices 1, the front wheel of the bicycles 2 may be rotated relative to the frame or even may be transversely positioned, which is an advantage, when the bicycles 2 must be placed in a limited space. For instance, this is the case when use is made of bicycle parking modules or frames, as proposed in earlier patent applications of the same applicant, for example in a parking system for space-efficient parking of multiple bicycles, as is proposed in, inter alia, NL2019396.

With regard to the Search Report, that has been published since, the following can be noted. The Belgian patent specification BE1008333A4, mentioned in the Novelty Search Report, discloses a bicycle stand with a bicycle holding module, which is formed from a rectangular tube, in which not only the connection pin between the free end of the crank and the pedal is received, but also the connection pin between the (central) bottom bracket and the crank is received; in other words, the same crank is retained double, at two locations of the bicycle holding module, namely at the free end of the crank and near its axis of rotation. Contrary to the configuration known from BE1008333A4, in the configuration according to the invention only one single retention of the relevant bicycle crank is used, wherein only the connection pin between crank and pedal - thus at the free end of the crank - is retained, namely by means of a single, flat plate with a slot therein.

Therefore, the bicycle stand according to the invention is designed to be very flat, which in addition to being cost-effective (since it can be fabricated very easily) also offers advantages with regard to the number of bicycles that can be placed next to each other. In particular, practice has shown that the configuration as shown in Figure 4b has great advantages, by providing a flat, plate-shaped support body 4 with an essentially horizontally extending insertion slot 5. If such plate-shaped support bodies with horizontal insertion slots are arranged side by side in a series, and the (parallel) surfaces of the support bodies are arranged at an angle of approximately 30 degrees with respect to the imaginary connecting line of that series of support bodies, a very efficient use of the surface available for parking bicycles is obtained. In other words: a relatively large number of bicycles can be parked on a relatively small surface. Moreover, as practice shows, these bicycle stands are extremely simple and handy to use, thanks to the flat design of the support bodies 4 of the bicycle stands and the horizontal insertion/take-out slots 5.

## Claims

1. Device (1), intended and arranged for retaining a bicycle (2) essentially in upright position on a base (3),
comprising a support body (4) provided with an insertion slot (5), the support body and the insertion slot being arranged for receiving a connection part (6), that is provided between one of the cranks (7) and the foot pedal (8) connected to that crank of the bicycle to be retained or a similar bicycle.

2. Device according to claim 1, wherein the support body (4) comprises a support plate having a thickness which, at least in an edge region of the insertion slot, is smaller than the free distance between the outside of a crank and the inside of the food pedal connected thereto of the bicycle to be retained or a similar bicycle, which support plate is provided with an insertion slot (5) having a width that is larger than the diameter of the connection part (6), that is provided between the crank (7) and the foot pedal (8) of the bicycle to be retained or a similar bicycle, and that is smaller than the thickness and/or width of the foot pedal (8).

3. Device according to claim 1 or 2, wherein the insertion slot extends essentially vertically, and the support body and the insertion slot are arranged to receive essentially from above the connection part, that is provided between the crank and the foot pedal.

4. Device according to claim 1 or 2, wherein the insertion slot extends essentially vertically and the support body and the insertion slot are arranged to receive essentially from below the connection part, that is provided between the crank and the foot pedal.

5. Device according to claim 1 or 2, wherein the insertion slot extends essentially horizontally and the support body and the insertion slot are arranged to receive essentially from the front side or the rear side the connection part, that is provided between the crank and the foot pedal.

6. Device according to any one of the preceding claims, wherein the support body comprises an insertion opening (9), which is arranged for inserting the connection part (6), that is provided between the crank (7) and the foot pedal (8) of the bicycle to be retained or a similar bicycle.

7. Device according to claim 6, wherein the insertion opening extends essentially above the insertion slot.

8. Device according to claim 6, wherein the insertion opening extends essentially below the insertion slot.

9. Device according to claim 6, wherein the insertion opening extends essentially in the front or the rear, or essentailly in the central region of the insertion slot.

10. A device according to claim 6, wherein the insertion opening is in open communication with a side edge or top edge of the support body (4).

11. Device according to any one of the preceding claims, wherein the insertion slot is provided with, and/or connected to, an end of a take-out slot (11) which extends, with its other end, to the outside the support body.

12. Device according to any one of the claims 1 - 11, wherein the base is formed by a fixed base (3).

13. Device according to any one of the claims 1 - 11, wherein the base is formed by a mobile base.

14. Device according to claim 13, wherein the mobile base comprises a transport frame (10), which is arranged for moving the bicycle or a similar bicycle.

15. Device according to any one of the preceding claims, arranged for cooperation with a parking system for parking or storing a number of bicycles.
